(19)

**Europäisches Patentamt**
**European Patent Office**
**Office européen des brevets**

(11) **EP 4 336 344 B1**

(12) **EUROPEAN PATENT SPECIFICATION**

(45) Date of publication and mention
of the grant of the patent:
**11.03.2026 Bulletin 2026/11**

(21) Application number: **23191884.8**

(22) Date of filing: **17.08.2023**

(51) International Patent Classification (IPC):
***G06F 7/483*** *(2006.01)* ***G06F 7/544*** *(2006.01)*

(52) Cooperative Patent Classification (CPC):
**G06F 7/5443; G06F 7/483**

(54) **CALCULATION UNIT FOR MULTIPLICATION AND ACCUMULATION OPERATIONS**

RECHENEINHEIT FÜR MULTIPLIKATIONS- UND AKKUMULATIONSOPERATIONEN

UNITÉ DE CALCUL POUR OPÉRATIONS DE MULTIPLICATION ET D'ACCUMULATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.09.2022 IT 202200018330**

(43) Date of publication of application:
**13.03.2024 Bulletin 2024/11**

(73) Proprietor: **STMicroelectronics S.r.l.**
**20864 Agrate Brianza (MB) (IT)**

(72) Inventors:
• **GANDOLFI, Luca**
**20148 MILANO (IT)**
• **GAROZZO, Ugo**
**20147 MILANO (IT)**

(74) Representative: **Studio Torta S.p.A.**
**Via Viotti, 9**
**10121 Torino (IT)**

(56) References cited:
**WO-A1-2022/178339**

• **SARMA R ET AL: "A MUX based signed-floating-point MAC architecture using UCM algorithm", BULLETIN OF THE POLISH ACADEMY OF SCIENCES. TECHNICAL SCIENCES, 1 January 2020 (2020-01-01), Warsaw, pages 835, XP055931150, Retrieved from the Internet <URL:https://journals.pan.pl/Content/117264/PDF/20_835-844_01598_Bpast.No.68-4_27.08.20.pdf> [retrieved on 20220614], DOI: 10.24425/bpasts.2020.134182**
• **BRIAN CHMIEL ET AL: "Logarithmic Unbiased Quantization: Simple 4-bit Training in Deep Learning", ARXIV.ORG, CORNELL UNIVERSITY LIBRARY, 201 OLIN LIBRARY CORNELL UNIVERSITY ITHACA, NY 14853, 6 June 2022 (2022-06-06), XP091239247**

EP 4 336 344 B1

**Description**

The present invention relates to a calculation unit for multiplication and accumulation operations.

As is known, the iterative repetition of multiplication, sum and accumulation operations of partial results is the basis of different applications, for example in inference processes through neural networks, in filtering or in convolution.

In particular, a neural network comprises a plurality of artificial nodes or neurons organized in layers. Each node has inputs connected to the nodes of a previous adjacent layer (upstream) and an output connected to the nodes of a successive adjacent layer (downstream). The value $y_i$ provided at output by each node is obtained by applying an activation function $\varphi$, usually a threshold function, to a linear combination of the inputs $x_j$ (for example a number D of inputs $x_j$), with a possible bias coefficient or bias b

$$y_i = \varphi\left(\sum_{j=1}^{D} w_{ij} x_j + b\right) \tag{1}$$

The output of a layer of the neural network is represented synthetically by an output vector $\overline{Y}$ given by

$$\overline{Y} = \Phi(W\overline{X}) \tag{2}$$

where $\Phi$ is a vector of the activation functions of the layer nodes, $W$ is a weights matrix $w_{ij}$ and $\overline{X}$ is a vector of the inputs $x_j$.

The coefficients $w_{ij}$ of the linear combination are weights characteristic of each node and are determined during a neural network training process.

The calculation of the value $y_i$ provided at output by each node is the basis of the functioning of the neural network model, whatever the function provided by the same neural network (for example classification or extraction of characteristics).

From an implementation point of view, it is generally considered convenient to calculate the summation $\sum_{j=1}^{D} w_{ij} x_j + b$ iteratively, accumulating in a register the results of the products $w_{ij} x_j$ obtained.

The known solutions are however not satisfactory and have limitations for example in terms of execution speed, memory occupied and accuracy of the inferential process. By their nature, in fact, neural networks require considerable amounts of memory to store the weights $w_{ij}$ and slow execution times in the absence of optimized solutions.

In addition to the circuits involved in the execution of the calculation operations, the efficiency and accuracy of the neural networks are also affected by the representation chosen for the weights $w_{ij}$.

In quantized neural networks, the weights $w_{ij}$ are normally represented with less than 32 bits of the floating-point format "Single-precision floating-point format" often used and a compromise is sought between accuracy and memory occupied. The implementation should also take into account the compatibility of the quantization formats with the addressing modes and the word size of the general purpose processors normally in use in electronic systems. Conversely, the choice of a non-compatible format would pay off with a huge increase in execution times.

For example, it is known to use 8-bit fixed-point formats for the weights $w_{ij}$ and the 32-bit floating-point format for the operations, 8-bit pure fixed-point formats and binary formats in combination with the 32-bit floating-point format for the operations. However, the need remains to improve efficiency and accuracy at the same time, to be capable of achieving satisfactory results and allow the profitable use of neural networks in complex applications in real time.

The use of dedicated hardware accelerators has also been proposed, which however require an area not always available on the chips and in any case entails a higher cost per piece.

Similar problems are also present in different applications, for example for filtering and convolution operations.

WO 2022/1278339 A1 discloses a calculation unit comprising:

a multiplier, having a first input configured to receive a first factor and a second input configured to receive a second factor, the multiplier being configured to calculate a product of the first factor and of the second factor;
an accumulation memory element, containing a current accumulation value; and
a floating-point sum/subtraction unit, coupled to the multiplier and to the accumulation memory element to receive respectively the product and the current accumulation value and configured to calculate an updated accumulation value based on the sum of the product and of the current accumulation value and to store the updated accumulation value in the accumulation memory element;
wherein the first factor and the second factor each comprise a respective sign bit and respective exponent bits.

Other examples of known calculation units are disclosed in Sarma R ET AL, "A MUX based signed-floating-point MAC architecture using UCM algorithm", Bulletin of the Polish Academy of Sciences. Technical sciences, 1 January 2020, page 835, and in BRIAN CHMIEL ET AL, "Logarithmic Unbiased Quantization: Simple 4-bit Training in Deep Learning",

ARXIV.ORG, CORNELL UNIVERSITY LIBRARY, 201 OLIN LIBRARY CORNELL UNIVERSITY ITHACA, NY 14853, 6 June 2022.

The aim of the present invention is to provide a calculation unit that allows the limitations described to be overcome or at least mitigated.

According to the present invention, a calculation unit is provided as defined in claim 1.

For a better understanding of the invention, some embodiments thereof will now be described, purely by way of non-limiting example and with reference to the attached drawings, wherein:

- Figure 1 is a simplified block diagram of an electronic system comprising a calculation unit in accordance with an embodiment of the present invention;

- Figure 2 is a schematic representation of data used by the calculation unit of Figure 1;

- Figure 3 is a graph showing a quantization scale used by the calculation unit of Figure 1;

- Figure 4 is a block diagram of the calculation unit of Figure 1;

- Figure 5 is a more detailed block diagram of a portion of the calculation unit of Figure 1;

- Figure 6 is a block diagram of a calculation unit in accordance with a different embodiment of the present invention; and

- Figure 7 is a block diagram of a calculation unit in accordance with a further embodiment of the present invention.

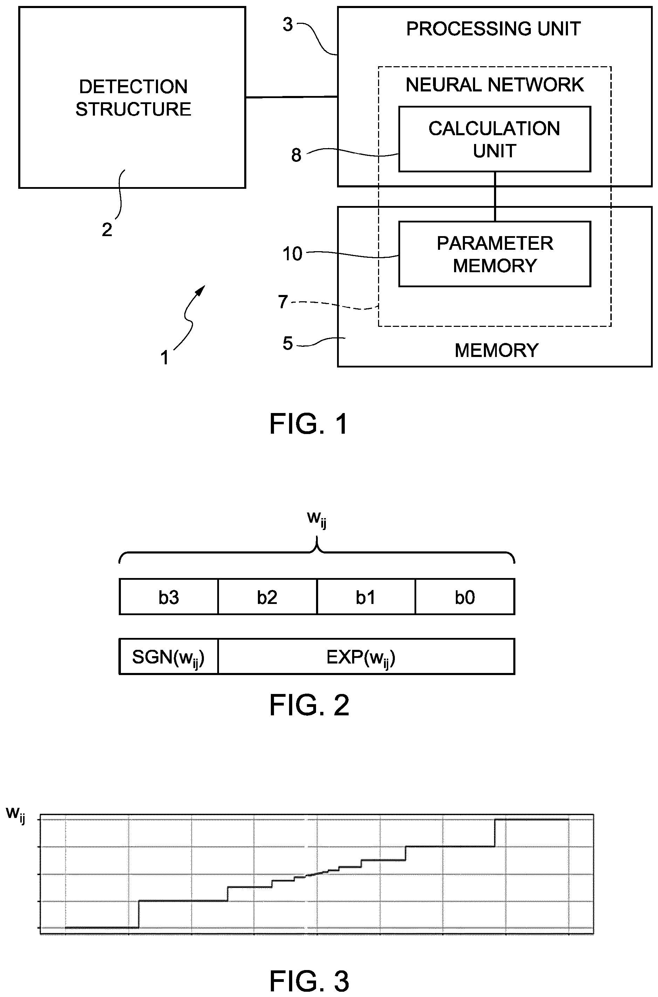

With reference to Figure 1, a sensor is indicated as a whole with the number 1 and comprises a detection structure 2, a processing unit 3 and a memory 5. The sensor 1 may be a sensor of any type, for example and not limited to an image sensor, a microelectromechanical inertial sensor, a microelectromechanical pressure sensor, a microelectromechanical electroacoustic sensor. However, the invention may be advantageously exploited in any context in which the use of a neural network is convenient or in any way desired, especially in the presence of limited resources in terms of available area and power supply autonomy.

In the embodiment of Figure 1, a neural network structure 7 comprises components of the processing unit 3 which define a calculation unit 8 and a portion of the memory 5 which defines a parameter memory 10. In other embodiments not illustrated, the neural network structure may comprise dedicated circuits and/or components as regards both the calculation unit and the parameter memory. In particular, as in the example of Figure 1, the calculation components and the memory of the neural network structure may be shared in whole or in part with the processing unit and the system memory. In one embodiment, the processing unit 3 and the memory 5 may be part of a RISC processor, for example of the RISC-V family, and the components of the calculation unit 8 may comprise standard processor components and dedicated components. Furthermore, the functionalities of the calculation unit 8 may be called through a RISC instruction.

For the weights, the neural network structure 7 uses a floating-point format with a number of bits equal to an integer fraction of a word bit number. In one embodiment, for example, the memory 5 is addressable by byte and 4 bits, equal to half of a standard 8-bit word, are assigned to each weight, as shown in Figure 2. In the chosen representation, the most significant bit b3 defines the sign of the weight $w_{ij}$, while the three least significant bits b0-b2 represent the exponent value. The quantization is therefore of the exponential type, as shown in Figure 3, and the weights $w_{ij}$ are defined by

$$w_{ij} = (-1)^{SGN} 2^{-EXP} \tag{3}$$

where SGN is the sign defined by the most significant bit b3 and EXP is the exponent defined by the least significant bits b0-b2. Consequently, the weights $w_{ij}$ of the nodes of the neural network structure 7 may assume the values $\pm 2^0$, $\pm 2^{-1}$, ..., $\pm 2^{-7}$.

In one embodiment, the weights are stored sequentially to adjacent memory addresses in the parameter memory 10. In the example described, therefore, each word of the parameter memory 10 contains two weights $w_{ij}$, $w_{ij+1}$ to be used in successive iterations. More generally, a word of M bit may contain N weights $w_{ij}$, $w_{ij+1}$, ..., $w_{ij+N-1}$ of M/N bits to be used in N successive iterations, M and N being two integers and M being an integer multiple of N. Alternatively, the memory addresses where the weights are stored may not all be adjacent. For example, the addresses of the weights may comprise blocks of addresses; within each block the addresses are adjacent, while the blocks are not adjacent to each other. The addresses and possibly their grouping into blocks are not necessarily fixed. In successive times, different parts of the memory 5 may be used as parameter memory.

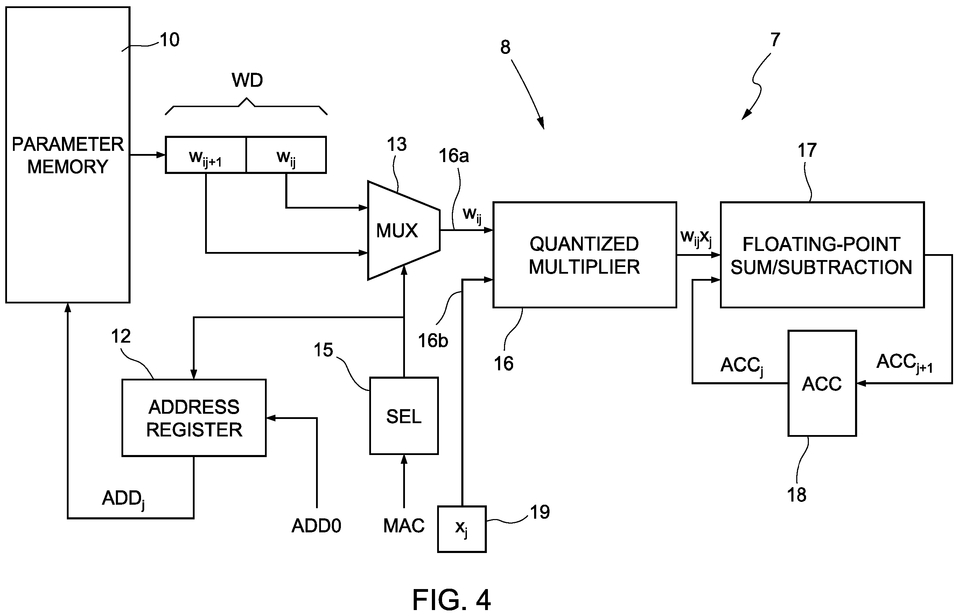

The neural network structure 7 is shown in greater detail in Figure 4. In particular, the calculation unit 8 is configured to operate as a Multiply and Accumulate (MAC) stage and comprises an address register 12, an input multiplexer 13, a selector 15, a quantization multiplier 16, a floating-point sum/subtraction unit 17 and an accumulation register 18.

In one embodiment, the input multiplexer 13 and the quantization multiplier 16 may be defined by dedicated components, while the parameter memory 10, the address register 12, the selector 15, the floating-point sum/subtraction unit 17 and the accumulation register 18 may be standard components of a RISC processor, for example of the RISC-V family.

As already mentioned, the parameter memory 10 may only include adjacent addresses or blocks of addresses, each of which contains adjacent addresses. In the embodiment described herein, the processing unit 3 is part of a RISC processor and the calculation unit 8 may be activated by calling a multiply and accumulate instruction MAC of the RISC processor to perform multiplication and accumulation operations. In this case, in particular, the calculation unit 8 is configured to calculate a product (specifically, of a weight $w_{ij}$ for a corresponding input $x_j$), add the product to the content of the accumulation register 18 and update the content of the accumulation register 18 with the result of the sum in response to each call of the multiply and accumulate MAC instruction.

The address register 12 contains a current address $ADD_j$ of a memory location where there are stored weights to be used. More precisely, a memory word WD at the current address $ADD_j$ is addressed by the address register 12 and, in consideration of the representation in use in the embodiment of Figures 1-4, contains a weight $w_{ij}$ and a weight $w_{ij+1}$ to be used in two consecutive calculation iterations. The address register 12 is accessible in writing, for example by an address management module not shown of the processing unit 3, to receive an initial address $ADD_0$ of the first address of the parameter memory 10 (or of one of the blocks that form the parameter memory 10). The content of the address register 12 may be increased to update the current address $ADD_j$ by the selector 15, which is configured to switch, in response to each call of the MAC instruction. For example, the selector 15 may have an input 15a receiving a MAC signal correlated to the activation of the MAC instruction. Advantageously, the increase of the current address $ADD_j$ is carried out every two calls of the MAC instruction and therefore every two switchings of the selector 15, to use the weights $w_{ij}$, $w_{ij+1}$ contained in each memory word WD in two successive iterations, as explained in detail hereinbelow. In the embodiment described herein, the selector 15 may simply be a flip-flop and the increase of the current address $ADD_j$ may be carried out when the selector 15 switches from a high logic value to a low logic value.

The input multiplexer 13 receives a word WD from the parameter memory 10 and selectively provides one of the weights contained in the received word WD. More in detail, the input multiplexer 13 has a first input, receiving a first portion $WD_0$ of the memory word WD containing the weight $w_{ij}$ (for example, the four least significant bits), and a second input, receiving a second portion $WD_1$ of the memory word WD containing the weight $w_{ij+1}$ (for example, the four most significant bits). The selector 15 controls the input multiplexer 13 so that the first portion $WD_0$ and the second portion $WD_1$ of the memory word WD are alternately passed on output in consecutive iterations. In practice, in a first iteration the selector 15 selects the first input and the input multiplexer 13 provides the first portion $WD_0$ of the memory word WD with the weight $w_{ij}$; in a second consecutive iteration the selector 15 selects the second input and the input multiplexer 13 provides the second portion $WD_1$ of the memory word WD with the weight $w_{ij}$. Since the content of the address register 12 is increased every two calls of the MAC instruction, each word WD is read twice in two consecutive iterations and the weights $w_{ij}$, $w_{ij+1}$ contained respectively in the first portion $WD_0$ and in the second portion $WD_1$ are provided in succession on the output of the input multiplexer 13.

The quantization multiplier 16 has a first input 16a receiving the weight $w_{ij}$ from the input multiplexer 13 and a second input 16b receiving the corresponding input $x_j$ from the processing unit 3 and is configured to calculate the product, $w_{ij}x_j$, as described in detail below. For example, the input $x_j$ may be temporarily stored in an input register 19 of the processing unit 3. More precisely, the inputs $x_j$ (j = 0, 1, ..., D) are provided in succession in the input register 19 at each calculation iteration. In practice, every time a weight $w_{ij}$ is selected through the input multiplexer 13, a corresponding input $x_j$ is made available in the input register 19.

The floating-point sum/subtraction unit 17 receives the product $w_{ij}x_j$ from the quantization multiplier 16 and a current accumulation value $ACC_j$ from the accumulation register 18. The floating-point sum/subtraction unit 17 is configured to determine an updated accumulation value $ACC_{j+1}$ by adding the product $w_{ij}x_j$ from the quantization multiplier 16 and the current accumulation value $ACC_j$ from the accumulation register 18. The updated accumulation value $ACC_{j+1}$ is stored in the accumulation register 18 in lieu of the current accumulation value $ACC_j$.

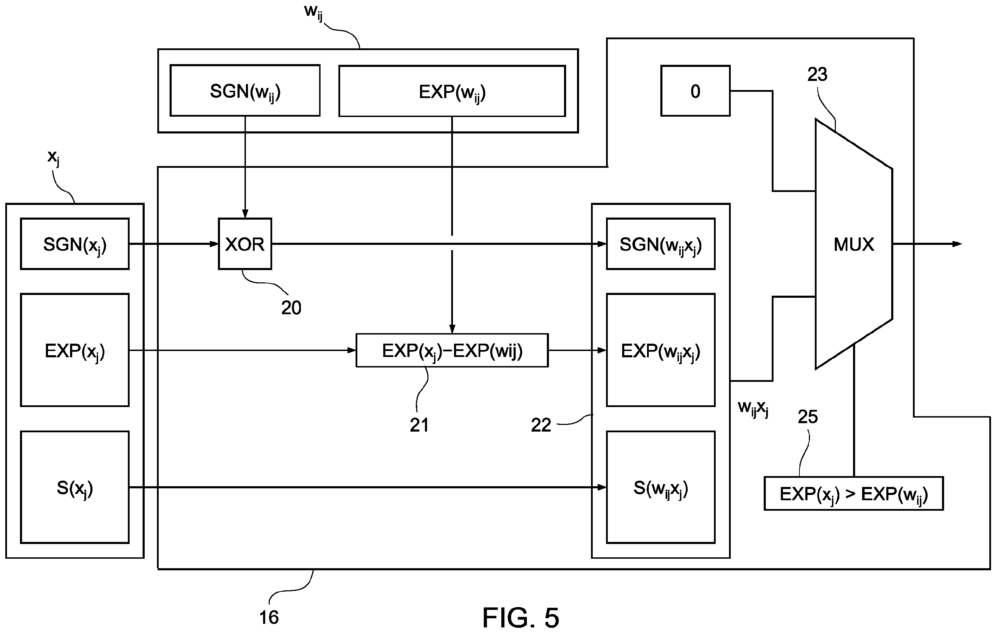

With reference to Figure 5, the quantization multiplier 16 comprises a sign multiplier 20, a subtractor 21, a result register 22, an output multiplexer 23 and a control logic module 25.

As already mentioned, the quantization multiplier 16 receives a weight $w_{ij}$ from the multiplexer 18 and a corresponding input $x_j$, for example from the input register 19 of the processing unit 3. The input $x_j$ has for a part the same format of the weights $w_{ij}$ (a sign bit SGN ($x_j$) and an exponent EXP($x_j$) of three bits in the example described) and also comprises a significant part $S(x_j)$ with a number of bits defined according to the design preferences.

The sign multiplier 20, which may be implemented by an exclusive logic gate, for example an XOR gate, receives the sign bit SGN($x_j$) of the input $x_j$ and the sign bit SGN ($w_{ij}$) of the weight $w_{ij}$ and provides their product in a sign bit

SGN($w_{ij}x_j$) of the result register 22.

The subtractor 22 calculates the difference between the exponent EXP($x_j$) of the input $x_j$ and the exponent EXP($w_{ij}$) of the weight $w_{ij}$. The result of the operation is recorded in the exponent portion EXP($w_{ij}x_j$) of the result register 22.

The significant part S($x_j$) of the input $x_j$ is passed directly to the corresponding significant part S($w_{ij}x_j$) of the result register 22.

In this manner, the product $w_{ij}x_j$ may be made available by simply using an XOR gate for the sign and a subtractor for the difference of the exponents, avoiding the execution of multiplications in hardware.

The output multiplexer 23 has a first input coupled to the result register 22, to receive the product $w_{ij}x_j$, a second input receiving a programmed value, for example the value 0, and an output coupled to the floating-point sum/subtraction unit 17.

The control logic module 25 controls the output multiplexer 23 to select the calculated product $w_{ij}x_j$ or the programmed value on the basis of the condition EXP($x_j$)>EXP($w_{ij}$). In particular, if the condition occurs, the control logic module 25 selects the calculated product $w_{ij}x_j$; if, on the other hand, the condition does not occur, the control logic module 25 selects the programmed value 0. In practice, the subnormal numbers are excluded, having negligible values for the applications of interest and which, requiring 0 as the value of the most significant bit instead of 1, would need dedicated circuitry. By excluding them, it may be assumed that the most significant bit (implicit in the floating-point standard) is always 1, saving area.

As already observed, the quantization multiplier 16 may perform the product between a weight $w_{ij}$ and the corresponding input $x_j$ with an extremely limited number of elementary operations, without having to perform multiplications in hardware. Even the additional components with respect to the RISC architecture have minimal impact in terms of complexity and occupied area.

The multiplication and accumulation procedure may be performed through a single instruction, since, in addition to calculating the products $w_{ij}x_j$ by addition in hardware and accumulation of exponents, the calculation unit 8 automatically provides for the update of the current address of the weights, for the addressing of the parameter memory 10 and for the extraction of the memory word containing the weights from the parameter memory 10.

The invention therefore achieves high efficiency without a significant increase in the occupied area, with an evident advantage. Even the quantized four-bit floating-point format chosen for the weights allows the memory space to be used in an efficient manner and ultimately contributes to reducing the occupied area and the execution times. In particular, in the vast majority of cases, the access to memories is carried out by byte. The chosen format adapts to the standard memory access modes and avoids the execution times of the operations being penalized.

Also from the point of view of accuracy, the quantized exponential format used allows satisfactory results to be obtained. Due to the standardization and normalization of the inputs, common in neural networks, the weight distribution is concentrated around zero and, furthermore, the weights have values lower than 1. The exponential quantization, of the type illustrated in Figure 3, is particularly sensitive right in the value range. Consequently, the accuracy, defined as the number of correct inferences with respect to the total of the tests performed, is very high and comparable with that of the best performing neural network models with the.

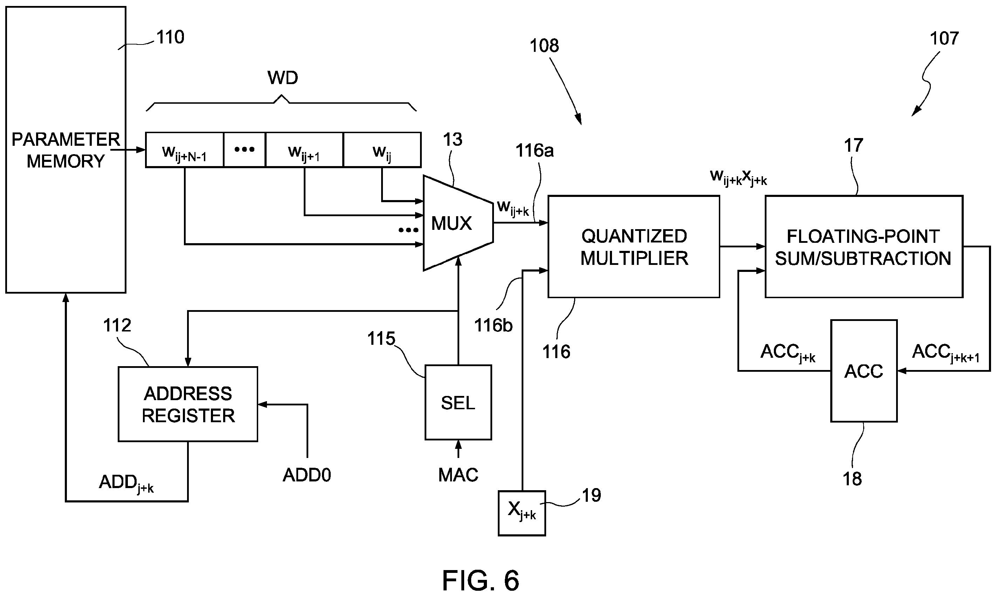

Figure 6 illustrates a different embodiment of the invention, wherein like parts to those already shown are indicated with the same reference numbers. In this case, a neural network structure 107 comprises a calculation unit 108 and a parameter memory 110. The parameter memory 110 has words of M bits, each containing N weights $w_{ij}$, $w_{ij+1}$, ..., $w_{ij+N-1}$ of M/N bits to be used in N successive iterations.

The calculation unit 108 comprises an address register 112, an input multiplexer 113 having N vias, a selector 115, the quantization multiplier 16, the floating-point sum/subtraction unit 17 and the accumulation register 18.

The address register 112 contains a current address $ADD_j$ of a memory location where there are stored weights to be used. The address register 112 is accessible in writing, to receive an initial address $ADD_0$ of the first address of the parameter memory 110 or of one of the blocks that form the parameter memory 110. The content of the address register 12 may be increased to update the current address $ADD_j$ by the selector 115, which is configured to switch at each call of the MAC instruction. The increase of the current address $ADD_j$ is carried out every N calls of the MAC instruction and therefore every N switchings of the selector 115, to use, in N successive iterations, the weights $w_{ij}$, $w_{ij+1}$, ..., $w_{ij+N-1}$ contained in each memory word WD.

The input multiplexer 113 has inputs receiving respective portions $WD_0$, $WD_1$, ..., $WD_{N-1}$ of the memory word WD. Each portion $WD_0$, $WD_1$, ..., $WD_{N-1}$ contains a respective weight $w_{ij}$, $w_{ij+1}$, ..., $w_{ij+N-1}$ of M/N bits. The selector 115, which may be defined by a module-N counter, controls the input multiplexer 113 so that the portions $WD_0$, $WD_1$, ..., $WD_{N-1}$ of the memory word WD and the weights $w_{ij}$, $w_{ij+1}$, ..., $w_{ij+N-1}$ respectively contained are sequentially passed on output in consecutive iterations.

In practice, in a first iteration the selector 115 selects the first input and the input multiplexer 113 provides the first portion $WD_0$ of the memory word WD with the weight $w_{ij}$. In a generic k-th successive iteration (k = 1, 2, ..., N-1; in the first iteration, k = 0), the selector 15 selects the k-th input and the input multiplexer 113 provides the k-th portion $WD_k$ of the memory word WD with the weight $w_{ij+k}$ contained therein. Since the content of the address register 112 is increased every N calls of the MAC instruction, each word WD is read N times in N consecutive iterations and the weights $w_{ij}$, $w_{ij+1}$, ..., $w_{ij+N-1}$ respectively contained in the portions $WD_0$, $WD_1$, ..., $WD_{N-1}$ are provided in succession on the output of the input multiplexer 113.

The quantization multiplier 16, except for the number of bits forming the exponent $EXP(w_{ij})$ of the weights $w_{ij}$ and the exponent $EXP(x_j)$ of the inputs $x_j$, may have the same structure and the same operation already described with reference to Figure 4.

Also the floating-point sum/subtraction unit 17 and the accumulation register 18 operate substantially as already described with reference to Figure 4.

In particular, the floating-point sum/subtraction unit 17 receives the product $w_{ij+k}x_{j+k}$ (k = 0, 1, ..., N-1) from the quantization multiplier 116 and a current accumulation value $ACC_{j+k}$ from the accumulation register 18. The floating-point sum/subtraction unit 17 is configured to determine an updated accumulation value $ACC_{j+1}$ by adding the product $w_{ij+k}x_{j+k}$ from the quantization multiplier 16 and the current accumulation value $ACC_{j+k}$ from the accumulation register 18. The updated accumulation value $ACC_{j+k+1}$ is stored in the accumulation register 18 in lieu of the current accumulation value $ACC_{j+k}$.

The processing unit 108 of Figure 6 allows exploiting the same calculation mechanism described for Figures 1-5 and may be applied to floating-point quantized exponential formats with a different number of bits for the memory words and for the exponent of the weights. Advantageously, the number of bits of the weights is an integer fraction of the number of bits of the memory words.

The calculation mechanism may also be exploited for applications other than the inferences of neural network, for example for filtering or convolution operations.

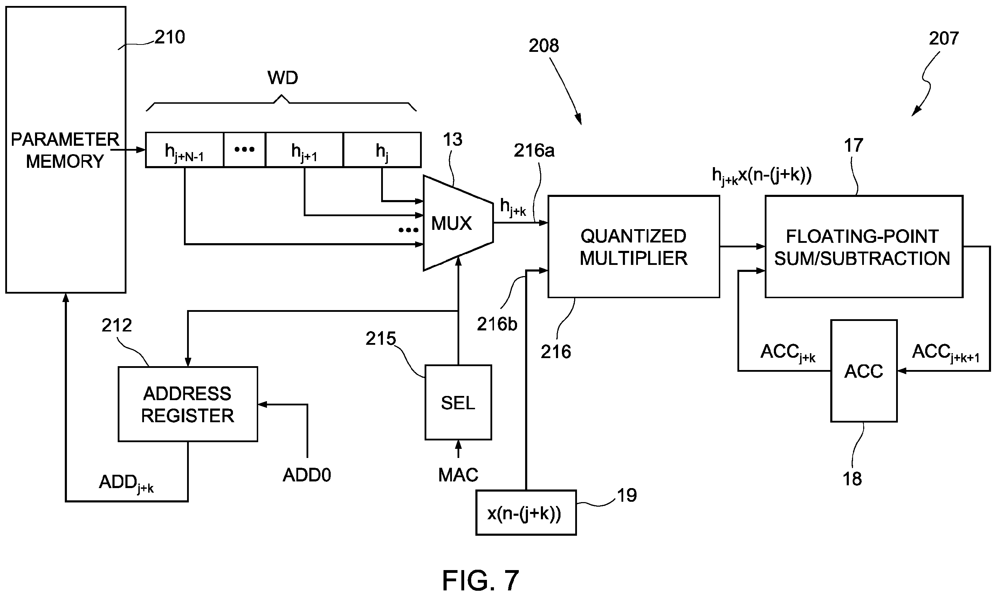

For example, a structure substantially identical to the neural network structure 107 of Figure 6 is shown in Figure 7 and may be used to provide a Finite Impulse Response filter or FIR filter 207. In general, the response y(n) of a FIR filter at the discrete time n is given by

$$y(n) = h_0 x(n) + h_1 x(n-1) + ... + h_N x(n-P) = \sum_{j=0}^{P} h_j x(n-j) \qquad (4)$$

where P and $h_0$, ..., $h_P$ are respectively the order and coefficients of the filter and x(n), ..., x(n-N) are the last input samples of the filter. In practice, therefore, the response y(n) is a linear combination of the filter coefficients $h_0$, ..., $h_P$ and of the last samples x (n), ..., x(n-N) (generically, x(n-j) with j = 0, ..., N) of the input variable. Also in this case, therefore, the result of interest may be determined by multiplication, sum and accumulation operations of partial results. Furthermore, the coefficients $h_0$, ..., $h_P$ are generally normalized. In applications wherein the normalization produces a bell-shaped distribution (for example a normal distribution) of the coefficients $h_0$, ..., $h_P$, the use of a quantized MAC procedure is particularly advantageous.

As shown in Figure 7, the FIR filter 207 comprises a calculation unit 208 and a parameter memory 210. The parameter memory 210 has words WD of M bits, each containing N respective coefficients $h_j$, ..., $h_{j+N-1}$ of M/N bits to be used in N successive iterations.

The calculation unit 208 comprises an address register 212, an input multiplexer 213 having N vias, a selector 215, the quantization multiplier 16, the floating-point sum/subtraction unit 17 and the accumulation register 18, substantially as already described with reference to Figure 6. The way of operating is also substantially the same and the result differs in that the content of the words WD and their portions represents the coefficients $h_0$, ..., $h_P$ of the filter 207 instead of the weights of a neural network.

A calculation unit with the described structure may be advantageously used also in the calculation of vector scalar products, which may be multiplication, sum and accumulation operations of partial results.

Finally, it is clear that modifications and variations may be made to the described calculation unit, without departing from the scope of the present invention, as defined in the attached claims.

## Claims

1. A calculation unit comprising:

    a multiplier (16; 116; 216), having a first input (16a; 116a; 216a) configured to receive a first factor ($w_{ij}$; $w_{ij+k}$; $h_j$) and a second input (16b; 116b; 216b) configured to receive a second factor ($x_j$; $x_{j+k}$; x(n-j)), the multiplier (16; 116; 216) being configured to calculate a product ($w_{ij}x_j$; $w_{ij+k}x_{j+k}$; $h_{j+k}$x(n-(j+k))) of the first factor ($w_{ij}$; $w_{ij+k}$; $h_j$) and of the second factor ($x_j$; $x_{j+k}$; x(n-j));
    an accumulation memory element (18), containing a current accumulation value ($ACC_j$); and

a floating-point sum/subtraction unit (17), coupled to the multiplier (16; 116; 216) and to the accumulation memory element (18) to receive respectively the product ($w_{ij}x_j$; $w_{ij+k}x_{j+k}$; $h_{j+k}x(n-(j+k))$) and the current accumulation value ($ACC_j$) and configured to calculate an updated accumulation value ($ACC_{j+1}$) based on the sum of the product ($w_{ij}x_j$; $w_{ij+k}x_{j+k}$; $h_{j+k}x(n-(j+k))$) and of the current accumulation value ($ACC_j$) and to store the updated accumulation value ($ACC_{j+1}$) in the accumulation memory element (18);

wherein the first factor ($w_{ij}$; $w_{ij+k}$; $h_j$) and the second factor ($x_j$; $x_{j+k}$; $x(n-j)$) each comprise a respective sign bit (SGN ($w_{ij}$), SGN ($x_j$)) and respective exponent bits (EXP($w_{ij}$); EXP($x_j$));

**characterized in that** the multiplier (16) comprises a sign multiplier (20), configured to calculate a product of the sign bits (SGN($w_{ij}$), SGN($x_j$)) of the first factor ($w_{ij}$; $w_{ij+k}$) and of the second factor ($x_j$; $x_{j+k}$), and a subtractor (21), configured to receive the exponent bits (EXP($w_{ij}$); EXP ($x_j$)) of the first factor ($w_{ij}$; $w_{ij+k}$) and of the second factor ($x_j$; $x_{j+k}$) and to subtract the exponent bits (EXP ($w_{ij}$)) of the first factor ($w_{ij}$; $w_{ij+k}$) from the exponent bits (EXP ($x_j$)) of the second factor ($x_j$; $x_{j+k}$).

2. The calculation unit according to claim 1, wherein the sign multiplier (20) comprises an exclusive logic gate, receiving the sign bits (SGN ($w_{ij}$), SGN($x_j$)) of the first factor ($w_{ij}$; $w_{ij+k}$) and of the second factor ($x_j$; $x_{j+k}$) and providing the product of the sign bits (SGN ($w_{ij}$), SGN($x_j$)) of the first factor ($w_{ij}$; $w_{ij+k}$) and of the second factor ($x_j$; $x_{j+k}$).

3. The calculation unit according to claim 1 or 2, wherein the multiplier (16) comprises a result register (22) and wherein the sign multiplier (20) is configured to store the product of the sign bits (SGN($w_{ij}$), SGN($x_j$)) of the first factor ($w_{ij}$; $w_{ij+k}$) and of the second factor ($x_j$; $x_{j+k}$) in a sign bit (SGN($w_{ij}x_j$)) of the result register (22).

4. The calculation unit according to any of the preceding claims, wherein the subtractor (21) is configured to store a difference between the exponent bits (EXP ($x_j$)) of the second factor ($x_j$; $x_{j+k}$) and the exponent bits (EXP($w_{ij}$)) of the first factor ($w_{ij}$; $w_{ij+k}$) in an exponent portion (EXP($w_{ij}x_j$)) of the result register (22).

5. The calculation unit according to any of the preceding claims, wherein the second factor ($x_j$; $x_{j+k}$) comprises significant part bits ($S(x_j)$) and wherein the multiplier (16) is configured to store the significant part bits ($S(x_j)$) of the second factor ($x_j$; $x_{j+k}$) in corresponding significant part bits ($S(w_{ij}x_j)$) of the result register (22).

6. The calculation unit according to any of the preceding claims, wherein the multiplier (16) comprises:

an output multiplexer (23), having a first input coupled to the result register (22), to receive the product of the sign bits (SGN ($w_{ij}$), SGN ($x_j$)) of the first factor ($w_{ij}$; $w_{ij+k}$) and of the second factor ($x_j$; $x_{j+k}$), a second input configured to receive a programmed value, and an output coupled to the floating-point sum/subtraction unit (17); and

a control logic module (25) configured to control the output multiplexer (23) so as to select the product of the sign bits (SGN ($w_{ij}$), SGN ($x_j$)) of the first factor ($w_{ij}$; $w_{ij+k}$) and of the second factor ($x_j$; $x_{j+k}$) or the programmed value on the basis of a relationship between the first factor ($w_{ij}$; $w_{ij+k}$) and the second factor ($x_j$; $x_{j+k}$).

7. The calculation unit according to claim 6, wherein the control logic module (25) is configured to control the output multiplexer (23) so as to select the product of the sign bits (SGN ($w_{ij}$), SGN ($x_j$)) of the first factor ($w_{ij}$; $w_{ij+k}$) and of the second factor ($x_j$; $x_{j+k}$) when a first exponent defined by the exponent bits (EXP($w_{ij}$)) of the first factor ($w_{ij}$; $w_{ij+k}$) and is smaller than a second exponent defined by the exponent bits (EXP ($x_j$)) of the second factor ($x_j$; $x_{j+k}$) and select the programmed value when the first exponent is greater than the second exponent.

8. A neural network structure, comprising a calculation unit (8; 108) according to any of the preceding claims.

9. The neural network structure according to claim 8, comprising a parameter memory (10; 110) containing a plurality of first factors ($w_{ij}$; $w_{ij+k}$), defining node weights of a neural network.

10. The neural network structure according to claim 9, wherein the parameter memory (10; 110) is addressable for words (WD) of M bits and each word (WD) contains N weights ($w_{ij}$, $w_{ij+1}$, ..., $w_{ij+N-1}$) of M/N bits, M and N being integers and M being an integer multiple of N; and wherein the calculation unit (8; 108) comprises an input multiplexer (13; 113) configured to receive one of the words (WD) from the parameter memory (10; 110) and selectively provide one of the weights ($w_{ij}$, $w_{ij+1}$, ..., $w_{ij+N-1}$) to the multiplier (16).

11. The neural network structure according to claim 10, wherein the calculation unit (8; 108) comprises a selector (15; 115) configured to control the input multiplexer (13; 113) so that the weights ($w_{ij}$, $w_{ij+1}$, ..., $w_{ij+N-1}$) contained in the word (WD) received by the input multiplexer (13; 113) are sequentially passed on output by the input multiplexer (13; 113).

**12.** The neural network structure according to claim 11, wherein the calculation unit (8; 108) comprises an address register (12; 112) containing a current address ($ADD_j$) of the word (WD) containing the weights ($w_{ij}$, $w_{ij+1}$, ..., $w_{ij+N-1}$) to be provided to the input multiplexer (13; 113); and wherein the selector (15; 115) is configured to control the input multiplexer (13; 113).

**13.** The neural network structure according to claim 12, wherein the parameter memory (10) is addressable for words (WD) of 8 bits and each word (WD) contains two weights ($w_{ij}$, $w_{ij+1}$) of 4 bits; and wherein the input multiplexer (13) has a first input, receiving a first portion ($WD_0$) of the memory word (WD), containing a first one of the weights ($w_{ij}$), and a second input, receiving a second portion ($WD_1$) of the memory word (WD), containing a second one of the weights ($w_{ij+1}$).

**14.** The neural network structure according to any of claims 9 to 13, wherein the weights ($w_{ij}$, $w_{ij+1}$) are stored in words (WD) at consecutive addresses of the parameter memory (10; 110).

**Patentansprüche**

**1.** Berechnungseinheit, die Folgendes umfasst:

einen Multiplikator (16; 116; 216), der einen ersten Eingang (16a; 116a; 216a), der so konfiguriert ist, dass er einen ersten Faktor ($w_{ij}$; $w_{ij+k}$; $h_j$) empfängt, und einen zweiten Eingang (16b; 116b; 216b) aufweist, der so konfiguriert ist, dass er einen zweiten Faktor ($x_j$; $x_{j+k}$; $x(n-j)$) empfängt, wobei der Multiplikator (16; 116; 216) so konfiguriert ist, dass er ein Produkt ($w_{ij}x_j$; $w_{ij+k}x_{j+k}$; $h_{j+k}x(n-(j+k))$) des ersten Faktors ($w_{ij}$; $w_{ij+k}$; $h_j$) und des zweiten Faktors ($x_j$; $x_{j+k}$; $x(n-j)$) berechnet;
ein Akkumulationsspeicherelement (18), das einen aktuellen Akkumulationswert ($ACC_j$) enthält; und
eine Gleitkomma-Summier-/Subtraktions-Einheit (17), die mit dem Multiplikator (16; 116; 216) und dem Akkumulationsspeicherelement (18) gekoppelt ist, um jeweils das Produkt ($w_{ij}x_j$; $w_{ij+k}x_{j+k}$; $h_{j+k}x (n-(j+k))$) und den aktuellen Akkumulationswert ($ACC_j$) zu empfangen, und so konfiguriert ist, dass sie einen aktualisierten Akkumulationswert ($ACC_{j+1}$) basierend auf der Summe des Produkts ($w_{ij}x_j$; $w_{ij+k}x_{j+k}$; $h_{j+k}x(n-(j+k))$) und des aktuellen Akkumulationswerts ($ACC_j$) berechnet und den aktualisierten Akkumulationswert ($ACC_{j+1}$) in dem Akkumulationsspeicherelement (18) speichert;
wobei der erste Faktor ($w_{ij}$; $w_{ij+k}$; $h_j$) und der zweite Faktor ($x_j$; $x_{j+k}$; $x(n-j)$) jeweils ein jeweiliges Vorzeichenbit ($SGN (w_{ij})$, $SGN(x_j)$) und jeweilige Exponentenbits ($EXP (w_{ij})$; $EXP(x_j)$) umfassen;
**dadurch gekennzeichnet, dass** der Multiplikator (16) einen Vorzeichenmultiplikator (20) umfasst, der so konfiguriert ist, dass er ein Produkt der Vorzeichenbits ($SGN(w_{ij})$, $SGN (x_j)$) des ersten Faktors ($w_{ij}$; $w_{ij+k}$) und des zweiten Faktors ($x_j$; $x_{j+k}$) berechnet, und einen Subtraktor (21), der so konfiguriert ist, dass er die Exponentenbits ($EXP (w_{ij})$; $EXP (x_j)$) des ersten Faktors ($w_{ij}$; $w_{ij+k}$) und des zweiten Faktors ($x_j$; $x_{j+k}$) empfängt und die Exponentenbits ($EXP (w_{ij})$) des ersten Faktors ($w_{ij}$; $w_{ij+k}$) von den Exponentenbits ($EXP(x_j)$) des zweiten Faktors ($x_j$; $x_{j+k}$) subtrahiert.

**2.** Berechnungseinheit nach Anspruch 1, wobei der Vorzeichenmultiplikator (20) ein exklusives Logikgatter umfasst, das die Vorzeichenbits ($SGN(w_{ij})$, $SGN(x_j)$) des ersten Faktors ($w_{ij}$; $w_{ij+k}$) und des zweiten Faktors ($x_j$; $x_{j+k}$) empfängt und das Produkt der Vorzeichenbits ($SGN(w_{ij})$, $SGN(x_j)$) des ersten Faktors ($w_{ij}$; $w_{ij+k}$) und des zweiten Faktors ($x_j$; $x_{j+k}$) bereitstellt.

**3.** Berechnungseinheit nach Anspruch 1 oder 2, wobei der Multiplikator (16) ein Ergebnisregister (22) umfasst und wobei der Vorzeichenmultiplikator (20) so konfiguriert ist, dass er das Produkt der Vorzeichenbits ($SGN(w_{ij})$, $SGN (x_j)$) des ersten Faktors ($w_{ij}$; $w_{ij+k}$) und des zweiten Faktors ($x_j$; $x_{j+k}$) in einem Vorzeichenbit ($SGN (w_{ij}x_j)$) des Ergebnisregisters (22) speichert.

**4.** Berechnungseinheit nach einem der vorhergehenden Ansprüche, wobei der Subtraktor (21) so konfiguriert ist, dass er eine Differenz zwischen den Exponentenbits ($EXP (x_j)$) des zweiten Faktors ($x_j$; $x_{j+k}$) und den Exponentenbits ($EXP(w_{ij})$) des ersten Faktors ($w_{ij}$; $w_{ij+k}$) in einem Exponentenanteil ($EXP (w_{ij}x_j)$) des Ergebnisregisters (22) speichert.

**5.** Berechnungseinheit nach einem der vorhergehenden Ansprüche, wobei der zweite Faktor ($x_j$; $x_{j+k}$) signifikante Teilbits ($S(x_j)$) umfasst und wobei der Multiplikator (16) so konfiguriert ist, dass er die signifikanten Teilbits ($S(x_j)$) des zweiten Faktors ($x_j$; $x_{j+k}$) in entsprechenden signifikanten Teilbits ($S(w_{ij}x_j)$) des Ergebnisregisters (22) speichert.

6. Berechnungseinheit nach einem der vorhergehenden Ansprüche, wobei der Multiplikator (16) umfasst:

   einen Ausgangsmultiplexer (23), der einen ersten Eingang, der mit dem Ergebnisregister (22) gekoppelt ist, um das Produkt der Vorzeichenbits ($SGN(w_{ij})$, $SGN(x_j)$) des ersten Faktors ($w_{ij}$; $w_{ij+k}$) und des zweiten Faktors ($x_j$; $x_{j+k}$) zu empfangen, einen zweiten Eingang, der so konfiguriert ist, dass er einen programmierten Wert empfängt, und einen Ausgang aufweist, der mit der Gleitkomma-Summier-/Subtraktions-Einheit (17) gekoppelt ist; und ein Steuerlogikmodul (25), das so konfiguriert ist, dass es den Ausgangsmultiplexer (23) steuert, um das Produkt der Vorzeichenbits ($SGN(w_{ij})$, $SGN(x_j)$) des ersten Faktors ($w_{ij}$; $w_{ij+k}$) und des zweiten Faktors ($x_j$; $x_{j+k}$) oder den programmierten Wert auf der Basis einer Beziehung zwischen dem ersten Faktor ($w_{ij}$; $w_{ij+k}$) und dem zweiten Faktor ($x_j$; $x_{j+k}$) auszuwählen.

7. Berechnungseinheit nach Anspruch 6, wobei das Steuerlogikmodul (25) so konfiguriert ist, dass es den Ausgangsmultiplexer (23) steuert, um das Produkt der Vorzeichenbits ($SGN(w_{ij})$, $SGN(x_j)$) des ersten Faktors ($w_{ij}$; $w_{ij+k}$) und des zweiten Faktors ($x_j$; $x_{j+k}$) auszuwählen, wenn ein erster Exponent, der durch die Exponentenbits ($EXP(w_{ij})$) des ersten Faktors ($w_{ij}$; $w_{ij+k}$) definiert ist, kleiner ist als ein zweiter Exponent, der durch die Exponentenbits ($EXP(x_j)$) des zweiten Faktors ($x_j$; $x_{j+k}$) definiert ist, und den programmierten Wert auszuwählen, wenn der erste Exponent größer ist als der zweite Exponent.

8. Neuronale Netzwerkstruktur, umfassend eine Berechnungseinheit (8; 108) nach einem der vorhergehenden Ansprüche.

9. Neuronale Netzwerkstruktur nach Anspruch 8, umfassend einen Parameterspeicher (10; 110), der eine Vielzahl von ersten Faktoren ($w_{ij}$; $w_{ij+k}$) enthält, die Knotengewichte eines neuronalen Netzwerks definieren.

10. Neuronale Netzwerkstruktur nach Anspruch 9, wobei der Parameterspeicher (10; 110) für Wörter (WD) von M Bits adressierbar ist und jedes Wort (WD) N Gewichte ($w_{ij}$, $W_{ij+1}$, ..., $w_{ij+N-1}$) von M/N Bits enthält, wobei M und N ganze Zahlen sind und M ein ganzes Vielfaches von N ist; und wobei die Berechnungseinheit (8; 108) einen Eingangsmultiplexer (13; 113) umfasst, der so konfiguriert ist, dass er eines der Wörter (WD) aus dem Parameterspeicher (10; 110) empfängt und dem Multiplikator (16) eines der Gewichte ($w_{ij}$, $w_{ij+1}$, ..., $w_{ij+N-1}$) selektiv bereitstellt.

11. Neuronale Netzwerkstruktur nach Anspruch 10, wobei die Berechnungseinheit (8; 108) einen Selektor (15; 115) umfasst, der so konfiguriert ist, dass er den Eingangsmultiplexer (13; 113) so steuert, dass die in dem von dem Eingangsmultiplexer (13; 113) empfangenen Wort (WD) enthaltenen Gewichte ($w_{ij}$, $w_{ij+1}$, ..., $w_{ij+N-1}$) sequenziell an den Ausgang des Eingangsmultiplexers (13; 113) weitergegeben werden.

12. Neuronale Netzwerkstruktur nach Anspruch 11, wobei die Berechnungseinheit (8; 108) ein Adressregister (12; 112) umfasst, das eine aktuelle Adresse ($ADD_j$) des Wortes (WD) enthält, das die Gewichte ($w_{ij}$, $w_{ij+1}$, ..., $w_{ij+N-1}$) enthält, die dem Eingangsmultiplexer (13; 113) bereitgestellt werden sollen; und wobei der Selektor (15; 115) so konfiguriert ist, dass er den Eingangsmultiplexer (13; 113) steuert.

13. Neuronale Netzwerkstruktur nach Anspruch 12, wobei der Parameterspeicher (10) für Wörter (WD) von 8 Bit adressierbar ist und jedes Wort (WD) zwei Gewichte ($w_{ij}$, $w_{ij+1}$) von 4 Bit enthält; und wobei der Eingangsmultiplexer (13) einen ersten Eingang, der einen ersten Teil ($WD_0$) des Speicherworts (WD) empfängt, der ein erstes der Gewichte ($w_{ij}$) enthält, und einen zweiten Eingang aufweist, der einen zweiten Teil ($WD_1$) des Speicherworts (WD) empfängt, der ein zweites der Gewichte ($w_{ij+1}$) enthält.

14. Neuronale Netzwerkstruktur nach einem der Ansprüche 9 bis 13, wobei die Gewichte ($w_{ij}$, $w_{ij+1}$) in Wörtern (WD) an aufeinanderfolgenden Adressen des Parameterspeichers (10; 110) gespeichert sind.

**Revendications**

1. Unité de calcul comprenant :

   un multiplicateur (16 ; 116 ; 216), ayant une première entrée (16a ; 116a ; 216a) configurée pour recevoir un premier facteur ($w_{ij}$ ; $w_{ij+k}$ ; $h_j$) et une deuxième entrée (16b ; 116b ; 216b) configurée pour recevoir un deuxième facteur ($x_j$ ; $x_{j+k}$ ; $x(n-j)$), le multiplicateur (16 ; 116 ; 216) étant configuré pour calculer un produit ($w_{ij}x_j$; $w_{ij+k}x_{j+k}$; $h_{j+k}x(n-(j+k))$) du premier facteur ($w_{ij}$ ; $w_{ij+k}$ ; $h_j$) et du deuxième facteur ($x_j$ ; $x_{j+k}$ ; $x(n-j)$) ;

un élément de mémoire à accumulation (18), contenant une valeur d'accumulation courante ($ACC_j$) ; et une unité d'addition/soustraction en virgule flottante (17), couplée au multiplicateur (16 ; 116 ; 216) et à l'élément de mémoire à accumulation (18) pour recevoir respectivement le produit ($w_{ij}x_j$ ; $w_{ij+k}x_{j+k}$ ; $h_{j+k}x(n-(j+k))$) et la valeur d'accumulation courante ($ACC_j$) et configurée pour calculer une valeur d'accumulation actualisée ($ACC_{j+1}$) basée sur la somme du produit ($w_{ij}x_j$ ; $w_{ij+k}x_{j+k}$ ; $h_{j+k}x(n-(j+k))$) et de la valeur d'accumulation courante ($ACC_j$) et pour enregistrer la valeur d'accumulation actualisée ($ACC_{j+1}$) dans l'élément de mémoire à accumulation (18) ; dans laquelle le premier facteur ($w_{ij}$ ; $w_{ij+k}$ ; $h_j$) et le deuxième facteur ($x_j$ ; $x_{j+k}$ ; $x(n-j)$) comprennent chacun un bit de signe respectif ($SGN(w_{ij})$, $SGN(x_j)$) et des bits d'exposant respectifs ($EXP(w_{ij})$ ; $EXP(x_j)$) ;

**caractérisée en ce que** le multiplicateur (16) comprend un multiplicateur de signes (20), configuré pour calculer un produit des bits de signe ($SGN(w_{ij})$, $SGN(x_j)$) du premier facteur ($w_{ij}$ ; $w_{ij+k}$) et du deuxième facteur ($x_j$ ; $x_{j+k}$), et un soustracteur (21), configuré pour recevoir les bits d'exposant ($EXP(w_{ij})$ ; $EXP(x_j)$) du premier facteur ($W_{ij}$ ; $w_{ij+k}$) et du deuxième facteur ($x_j$ ; $x_{j+k}$) et pour soustraire les bits d'exposant ($EXP(w_{ij})$) du premier facteur ($w_{ij}$ ; $w_{ij+k}$) des bits d'exposant ($EXP(x_j)$) du deuxième facteur ($x_j$ ; $x_{j+k}$).

2. Unité de calcul selon la revendication 1, dans laquelle le multiplicateur de signes (20) comprend une porte logique exclusive, recevant les bits de signe ($SGN(w_{ij})$, $SGN(x_j)$) du premier facteur ($w_{ij}$ ; $w_{ij+k}$) et du deuxième facteur ($x_j$ ; $x_{j+k}$) et fournissant le produit des bits de signe ($SGN(w_{ij})$, $SGN(x_j)$) du premier facteur ($w_{ij}$ ; $w_{ij+k}$) et du deuxième facteur ($x_j$ ; $x_{j+k}$).

3. Unité de calcul selon la revendication 1 ou 2, dans laquelle le multiplicateur (16) comprend un registre de résultat (22) et dans laquelle le multiplicateur de signes (20) est configuré pour enregistrer le produit des bits de signe ($SGN(w_{ij})$, $SGN(x_j)$) du premier facteur ($w_{ij}$ ; $w_{ij+k}$) et du deuxième facteur ($x_j$ ; $x_{j+k}$) dans un bit de signe ($SGN(w_{ij}x_j)$) du registre de résultat (22).

4. Unité de calcul selon l'une quelconque des revendications précédentes, dans laquelle le soustracteur (21) est configuré pour enregistrer une différence entre les bits d'exposant ($EXP(x_j)$) du deuxième facteur ($x_j$ ; $x_{j+k}$) et les bits d'exposant ($EXP(w_{ij})$) du premier facteur ($w_{ij}$ ; $w_{ij+k}$) dans une partie d'exposant ($EXP(wi_jx_j)$) du registre de résultat (22).

5. Unité de calcul selon l'une quelconque des revendications précédentes, dans laquelle le deuxième facteur ($x_j$ ; $x_{j+k}$) comprend des bits de partie significative ($S(x_j)$) et dans laquelle le multiplicateur (16) est configuré pour enregistrer les bits de partie significative ($S(x_j)$) du deuxième facteur ($x_j$ ; $x_{j+k}$) dans des bits de partie significative correspondants ($S(w_{ij}x_j)$) du registre de résultat (22).

6. Unité de calcul selon l'une quelconque des revendications précédentes, dans laquelle le multiplicateur (16) comprend :

un multiplexeur de sortie (23), ayant une première entrée couplée au registre de résultat (22), pour recevoir le produit des bits de signe ($SGN(w_{ij})$, $SGN(x_j)$) du premier facteur ($w_{ij}$ ; $w_{ij+k}$) et du deuxième facteur ($x_j$ ; $x_{j+k}$), une deuxième entrée configurée pour recevoir une valeur programmée, et une sortie couplée à l'unité d'addition/-soustraction en virgule flottante (17) ; et
un module de logique de commande (25) configuré pour commander le multiplexeur de sortie (23) afin de sélectionner le produit des bits de signe ($SGN(w_{ij})$, $SGN(x_j)$) du premier facteur ($w_{ij}$ ; $w_{ij+k}$) et du deuxième facteur ($x_j$ ; $x_{j+k}$) ou la valeur programmée en fonction d'une relation entre le premier facteur ($w_{ij}$ ; $w_{ij+k}$) et le deuxième facteur ($x_j$ ; $x_{j+k}$).

7. Unité de calcul selon la revendication 6, dans laquelle le module de logique de commande (25) est configuré pour commander le multiplexeur de sortie (23) afin de sélectionner le produit des bits de signe ($SGN(w_{ij})$, $SGN(x_j)$) du premier facteur ($w_{ij}$ ; $w_{ij+k}$) et du deuxième facteur ($x_j$ ; $x_{j+k}$) quand un premier exposant défini par les bits d'exposant ($EXP(w_{ij})$) du premier facteur ($w_{ij}$ ; $w_{ij+k}$) est plus petit qu'un deuxième exposant défini par les bits d'exposant ($EXP(x_j)$) du deuxième facteur ($x_j$ ; $x_{j+k}$) et de sélectionner la valeur programmée quand le premier exposant est plus grand que le deuxième exposant.

8. Structure de réseau de neurones comprenant une unité de calcul (8 ; 108) selon l'une quelconque des revendications précédentes.

9. Structure de réseau de neurones selon la revendication 8, comprenant une mémoire de paramètres (10 ; 110) contenant une pluralité de premiers facteurs ($w_{ij}$ ; $w_{ij+k}$), définissant les poids de nœuds d'un réseau de neurones.

**10.** Structure de réseau de neurones selon la revendication 9, dans laquelle la mémoire de paramètres (10 ; 110) est adressable pour des mots (WD) de M bits et chaque mot (WD) contient N poids ($w_{ij}$, $w_{ij+1}$, ..., $w_{ij+N-1}$) de M/N bits, M et N étant des entiers et M étant un multiple entier de N ; et dans laquelle l'unité de calcul (8 ; 108) comprend un multiplexeur d'entrée (13 ; 113) configuré pour recevoir l'un des mots (WD) de la mémoire de paramètres (10 ; 110) et fournir de manière sélective l'un des poids ($w_{ij}$, $w_{ij+1}$, ..., $w_{ij+N-1}$) au multiplicateur (16).

**11.** Structure de réseau de neurones selon la revendication 10, dans laquelle l'unité de calcul (8 ; 108) comprend un sélecteur (15 ; 115) configuré pour commander le multiplexeur d'entrée (13 ; 113) de telle manière que les poids ($w_{ij}$, $w_{ij+1}$, ..., $w_{ij+N-1}$) contenus dans le mot (WD) reçu par le multiplexeur d'entrée (13 ; 113) sont mis en sortie de façon séquentielle par le multiplexeur d'entrée (13 ; 113).

**12.** Structure de réseau de neurones selon la revendication 11, dans laquelle l'unité de calcul (8 ; 108) comprend un registre d'adresse (12 ; 112) contenant une adresse courante ($ADD_j$) du mot (WD) contenant les poids ($w_{ij}$, $w_{ij+1}$, ..., $w_{ij+N-1}$) à fournir au multiplexeur d'entrée (13 ; 113) ; et dans lequel le sélecteur (15 ; 115) est configuré pour commander le multiplexeur d'entrée (13 ; 113).

**13.** Structure de réseau de neurones selon la revendication 12, dans laquelle la mémoire de paramètres (10) est adressable pour des mots (WD) de 8 bits et chaque mot (WD) contient deux poids ($w_{ij}$, $w_{ij+1}$) de 4 bits ; et dans laquelle le multiplexeur d'entrée (13) a une première entrée, recevant une première partie ($WD_0$) du mot de mémoire (WD), contenant un premier desdits poids ($w_{ij}$), et une deuxième entrée, recevant une deuxième partie ($WD_1$) du mot de mémoire (WD), contenant un deuxième desdits poids ($w_{ij+1}$).

**14.** Structure de réseau de neurones selon l'une quelconque des revendications 9 à 13, dans laquelle les poids ($w_{ij}$, $w_{ij+1}$) sont enregistrés dans des mots (WD) à des adresses successives de la mémoire de paramètres (10 ; 110).

FIG. 1

FIG. 2

FIG. 3

FIG. 4

FIG. 5

FIG. 6

FIG. 7

EP 4 336 344 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20221278339 A1

**Non-patent literature cited in the description**

- **SARMA R et al.** A MUX based signed-floating-point MAC architecture using UCM algorithm. *Bulletin of the Polish Academy of Sciences. Technical sciences*, 01 January 2020, 835

- Logarithmic Unbiased Quantization: Simple 4-bit Training in Deep Learning. **BRIAN CHMIEL et al.** ARXIV.ORG. CORNELL UNIVERSITY LIBRARY, 06 June 2022